# EUROPÄISCHE PATENTSCHRIFT

(11) **EP 3 075 061 B1**
(45) Veröffentlichungstag und Bekanntmachung des Hinweises auf die Patenterteilung: **10.11.2021**
(21) Anmeldenummer: 14783563.1
(22) Anmeldetag: 24.09.2014
(51) Int. Cl.: H02K 11/215, G01D 5/14, H01F 13/00

(54) **SENSORANORDNUNG UND VERWENDUNG DER SENSORANORDNUNG IN EINEM KRAFTFAHRZEUGSTEUERGERÄT**
SENSOR ARRANGEMENT AND USE OF THE SENSOR ARRANGEMENT IN A MOTOR VEHICLE CONTROL DEVICE
AGENCEMENT DE CAPTEURS ET UTILISATION DE L'AGENCEMENT DE CAPTEURS DANS UN APPAREIL DE COMMANDE DE VÉHICULE AUTOMOBILE

(30) Priorität: 26.11.2013 DE 102013224135; 10.01.2014 DE 102014200365
(43) Veröffentlichungstag der Anmeldung: 05.10.2016
(73) Patentinhaber: Continental Teves AG & Co. OHG, 60488 Frankfurt am Main (DE)
(72) Erfinder: BURGDORF, Christian, 63075 Offenbach (DE); PENZAR, Zlatko, 60529 Frankfurt am Main (DE); SCHARDT, Volker, 65599 Frickhofen (DE)
(74) Vertreter: Continental Corporation
(86) Internationale Anmeldenummer: PCT/EP2014/070370
(87) Internationale Veröffentlichungsnummer: WO 2015/078607

(56) Entgegenhaltungen:
- EP-A2- 1 975 569
- DE-A1-102010 039 916
- US-A- 3 663 843
- US-A1- 2003 034 775
- US-A1- 2006 244 441
- US-B2- 7 112 962

## Beschreibung

Die vorliegende Erfindung betrifft eine Sensoranordnung für ein Kraftfahrzeugsteuergerät gemäß Oberbegriff von Anspruch 1, eine Magnetisierungsvorrichtung zur Magnetisierung eines Permanentmagneten der erfindungsgemäßen Sensoranordnung sowie die Verwendung der erfindungsgemäßen Sensoranordnung in einem Kraftfahrzeugsteuergerät.

Die US 7,112,962 B2 zeigt einen Ringmagnet mit einer zentralen Öffnung für eine Sensoranordnung. US 3,663,843 beschreibt einen Halleffekt-Wandler, bei dem eine Hallsonde zwischen zwei Polen eines Magneten angeordnet ist. EP 1 975 569 A2 zeigt einen Magnet, der in einem scheibenförmigen Magnetträger teilweise eingespritzt ist. US 2006/0244441 A1 offenbart einen Rotorpositionssensor mit einem Magnetelement, was eine Ausnehmung aufweist. Das Dokument US 2003/0034775 A1 offenbart eine berührungslos arbeitende Sensoranordnung, welche einen Permanentmagneten umfasst, welcher ein Durchgangsloch mit einer Rechteckform mit abgerundeten Ecken aufweist, wobei der Permanentmagnet parallel zur längeren Achse des Durchgangslochs verlaufende Seitenflächen aufweist, welche parallel zueinander ausgerichtet sind.

Die DE 10 2010 039 916 A1 beschreibt eine Lineareinheit, welche eine Sensoreinrichtung zur Erfassung einer Rotorlage eines Elektromotors aufweist und wobei die Sensoreinrichtung als eine berührungslos arbeitende Sensoranordnung ausgebildet ist, die aus einem auf der Längsachse der Lineareinheit angeordneten Positionsgeber sowie einem nicht beweglichen Positionssensorelement besteht. In an sich bekannter Weise findet als Positionsgeber ein Magnet und als Positionssensorelement ein Magnetfeldsensor Anwendung.

Die Genauigkeit bei der Positionierung oder Kommutierung des Rotors ist durch einen auftretenden magnetischen Winkelfehler am Magnetfeldsensor, bezogen auf eine bevorzugte Magnetfeldrichtung, begrenzt. Für moderne Kraftfahrzeugsysteme ist es aufgrund wachsender Sicherheits- und Komfortanforderungen, bei zugleich geringerem zur Verfügung stehendem Platzbedarf, notwendig die mögliche Leistungsfähigkeit des Elektromotors, wie dessen maximal erzeugtes Drehmoment, in verbesserter Weise auszuschöpfen. Zudem können durch auftretende magnetische Streufelder weitere, eventuell angrenzende Sensoren, beispielsweise eines Kraftfahrzeugbremssystems, wesentlich beeinflusst werden. Dadurch können sicherheitskritische Situationen hervorgerufen und/oder der Komfort von Fahrzeuginsassen beeinträchtigt werden. Bekannte Maßnahmen, um diese Streufelder gegenüber weiteren funktionellen Baugruppen der unmittelbaren Umgebung zu dämpfen, sind insbesondere ferromagnetische Schirmbleche, die ringförmig um den Magneten vorgesehen werden. Unter Umständen muss der Magnet bei Verwendung von Schirmblech, für gleichbleibende Eigenschaften der Sensoranordnung, größer und/oder stärker dimensioniert werden. Die Abschirmung magnetischer Streufelder führt somit zu einem erhöhten Platzbedarf sowie zusätzlichen Herstellungskosten.

Aufgabe der Erfindung ist es, eine Sensoranordnung bereitzustellen, mit welcher eine Verringerung des magnetischen Winkelfehlers insbesondere im Bereich des Magnetfeldsensors erzielt wird. Eine weitere Aufgabe ist es, eine Verringerung der Beeinflussung weiterer funktioneller Baugruppen eines die Sensoranordnung umfassenden Kraftfahrzeugsteuergeräts durch magnetische Streufelder derselben zu erreichen. Weitere applikationsspezifische Voraussetzungen, wie beispielsweise Mindestfeldstärke an einem Sensor müssen dabei weiterhin erbracht werden.

Diese Aufgabe wird durch eine Sensoranordnung gemäß Anspruch 1 gelöst.

Die Erfindung ist durch Anspruch 1 definiert und beschreibt eine Sensoranordnung zur Erfassung einer Rotorposition eines Elektromotors insbesondere eines Kraftfahrzeugsteuergeräts, wobei die Sensoranordnung als berührungslos arbeitende Sensoranordnung ausgebildet ist, welche zumindest einen Permanentmagneten und wenigstens einen Magnetfeldsensor umfasst, wobei der Permanentmagnet in zumindest einer dem Magnetfeldsensor zugewandten Deckfläche wenigstens eine Vertiefung aufweist. Unter einer Vertiefung wird insbesondere eine Aussparung, wie z.B. eine Nut oder Fuge und/oder ein Durchgangsloch verstanden.

Insbesondere im Bereich des Magnetfeldsensors liegt somit vorteilhafterweise ein im Wesentlichen homogenerer Magnetfeldlinienverlauf mit, bezogen auf den Magnetfeldsensor, geringen Winkelfehlern vor, wobei geforderte Mindestfeldstärken weiterhin erreicht werden und magnetische Streufelder verringert werden können. Unter dem Winkelfehler ist eine Abweichung von der bevorzugten Feldrichtung in der Ebene des Magnetfeldsensors zu verstehen. Ist beispielsweise die Ebene des Magnetfeldsensors die xy-Ebene und die y-Richtung die bevorzugte, lässt sich der Winkelfehler aus dem Arkustangens des Verhältnisses der x- zur y-Komponente des Magnetfelds bestimmen.

Im Rahmen der Erfindung kann jedoch eine solche Abschirmung ebenfalls vorgesehen sein, wodurch sich aufgrund dessen Rückwirkung auf die Sensoranordnung voraussichtlich abweichende Maße, von den in dieser Anmeldung beispielsgemäß genannten, ergeben können. In einer gegenüber dem Permanentmagneten feststehenden Abschirmung werden Wirbelströme induziert, welche weitere Magnetfelder hervorrufen und somit ebenfalls die weiteren funktionellen Baugruppen stören können. In mit dem Permanentmagneten mitrotierenden Abschirmungen werden keine Wirbelströme induziert, weshalb diese Ausführung bevorzugt wäre. Jedoch muss, bei gleichbleiben hoher Messgenauigkeit über die Lebensdauer und äußeren Bedingungen, das durch die Abschirmung hervorgerufene, zusätzliche Massenträgheitsmoment aufgenommen werden können.

Eine längere Achse der Vertiefung verläuft entlang wenigstens einer ersten Polgrenze der Magnetisierung des Permanentmagneten. Der Permanentmagnet weist parallel zur längeren Achse der Vertiefung und/oder der ersten Polgrenze der Magnetisierung des Permanentmagneten Seitenflächen auf, welche einen kurvenförmigen Verlauf beschreiben. Diese sind bevorzugt spiegelsymmetrisch in Bezug auf die längere Achse.

Erfindungsgemäß ist der kurvenförmige Verlauf der Seitenflächen konkav ausgebildet.

Gemäß einer bevorzugten Ausführungsform weist die Vertiefung auf der Deckfläche des Permanentmagneten eine rechteckige oder ovale

Form auf. Ovale Formen umfassen dabei beispielsweise kreisförmige und elliptische Geometrien. In vorteilhafter Weise kann durch Anpassung der Maße des Permanentmagneten, insbesondere der Vertiefung, der Winkelfehler des Magnetfelds beeinflusst und hinsichtlich der jeweiligen Randbedingungen des Kraftfahrzeugsteuergeräts optimiert werden.

Die Vertiefung durchzieht die Deckfläche des Permanentmagneten entlang der längeren Achse in besonders bevorzugter Weise vollständig.

Gemäß einer bevorzugten Ausführungsform weisen weitere Seitenflächen des Permanentmagneten, welche nicht entlang der längeren Achse der Vertiefung und/oder der ersten Polgrenze ausgerichtet sind, einen kurvenförmigen, vorzugweise konvexen, oder geraden Verlauf auf. Kurvenförmige Verläufe sind beispielsweise hyperbolische, kreisbogenförmige oder elliptische ausgebildete Kurven. Alternativ können diese weiteren Seitenflächen des Permanentmagneten bevorzugt auch gerade und insbesondere parallel zueinander ausgebildet sein.

Gemäß einer besonders bevorzugten Ausführungsform der Sensoranordnung ist der Permanentmagnet als magnetischer Dipol oder magnetischer Quadrupol magnetisiert. Insbesondere im Falle des magnetischen Quadrupols können in vorteilhafter Weise magnetische Streufelder wesentlich reduziert werden, wodurch insbesondere eventuelle weitere, angrenzende funktionelle Baugruppen, z.B. Sensoren, des Steuergeräts, welches die Sensoranordnung umfasst, in geringerem Maße beeinflusst werden. Zudem kann auf eine zusätzliche Abschirmung des Magnetfelds verzichtet werden, was neben der Reduzierung von Fehlerquellen der Sensoranordnung bzw. des Gesamtsystems auch im Sinne verringerter Herstellungskosten und Platzbedarf von Vorteil ist. Bevorzugt besteht der Permanentmagnet aus einem kunststoffgebundenem Neodym-Eisen-Bor (NdFeB) Werkstoff.

Besonders bevorzugt ist der Magnetfeldsensor von der Deckfläche des Permanentmagneten derart beabstandet, dass dieser in einem Bereich eines Minimums eines Winkelfehlers des Magnetfelds des Permanentmagneten angeordnet ist. In vorteilhafter Weise ist es möglich den Abstand des Magneten zu dem Sensor im Vergleich zum Stand der Technik wesentlich zu verringern, wodurch insbesondere der Platzbedarf reduziert wird. Bevorzugt wird die Lage des Minimums des magnetischen Winkelfehlers, beispielsweise bezogen auf den Abstand von der Deckfläche des Magneten, durch entsprechende Auslegung der Sensorvorrichtung bzw. durch die in dieser Anmeldung beschriebenen Merkmale dieser und/oder des Permanentmagnets applikationsspezifisch angepasst, wobei der Magnet auch in unmittelbare Nähe des Magnetfeldsensors vorgesehen werden kann.

Der Permanentmagnet ist bevorzugt an einer Welle fixiert, wobei der Werkstoff des Permanentmagneten insbesondere in einem Spritzgussverfahren um und/oder an die Welle gespritzt wird. In vorteilhafter Weise erfolgt die Herstellung und Fixierung eines Grundkörpers, welcher zur Bildung des Permanentmagneten bevorzugt in einem nachfolgenden Prozessschritt magnetisiert wird, somit in einem Prozessschritt. Durch diese Maßnahme ergibt sich, insbesondere im Vergleich zu weiteren an sich bekannten Montageverfahren, wie beispielsweise Kleben des Permanentmagneten an die Welle, neben einer Einsparung von Herstellungskosten auch die Einhaltung notwendiger Toleranzen moderner Kraftfahrzeugsysteme, wie zum Beispiel eine geringe Unwucht der Welle. Im Rahmen der Erfindung sind jedoch auch weitere, insbesondere an sich bekannte, Fügeverfahren zur mechanischen Verbindung des Grundkörpers des Permanentmagneten oder des bereits magnetisierten Permanentmagneten mit der Welle vorgesehen. Dies sind zum Beispiel Kleben oder das Einpressen der Welle in eine dafür vorgesehene Öffnung des magnetisierten oder noch nicht magnetisierten Permanentmagneten.

Durch die Erfindung wird in vorteilhafter Weise weiterhin eine Verringerung der Ausmaße des Permanentmagneten bzw. des Volumens des Magnetwerkstoffs erzielt, wodurch das magnetische Streufeld des Permanentmagneten ebenfalls begrenzt werden kann, der Platzbedarf des Permanentmagneten reduziert wird und Materialkosten eingespart werden.

Eine nicht erfindungsgemäße Magnetisierungsvorrichtung dient zur Magnetisierung eines Permanentmagneten für die erfindungsgemäße Sensorvorrichtung, wobei die Magnetisierungsvorrichtung zumindest ein ein- oder mehrteiliges Joch und zumindest zwei Stromleiter aufweist und derart ausgestaltet ist, dass der zu magnetisierende Permanentmagnet als Quadrupol magnetisiert werden kann. Dadurch wird unterstützt, die Anforderungen, die an die erfindungsgemäße Sensoranordnung gestellt werden, zu erfüllen. Weiterhin kann die Magnetisierungsvorrichtung vorteilhafterweise vergleichsweise einfach in bestehende Produktionslinien integriert werden.

Gemäß einer bevorzugten Ausführungsform weist die Magnetisierungsvorrichtung zumindest zwei magnetische Kreise mit jeweils zumindest einem Spalt auf und ist derart ausgestaltet, dass der zu magnetisierende Permanentmagnet zumindest teilweise in beide magnetischen Kreise eingebracht werden kann. Bevorzugt werden magnetische Flüsse der magnetischen Kreise teilweise durch das durch die Spalte unterbrochene ein- oder mehrteilige Joch geführt, wobei die Magnetisierungsvorrichtung derart ausgestaltet ist, dass das Magnetfeld im Wesentlichen senkrecht in die Oberfläche des in die Spalte gebrachten Permanentmagneten eindringen und/oder im Wesentlichen senkrecht aus der Oberfläche des Permanentmagneten austreten kann. Weiterhin ist die Magnetisierungsvorrichtung derart ausgestaltet, dass eine Magnetisierung des an die Welle montierten Permanentmagneten realisierbar ist, wobei an die Welle insbesondere zudem ein Wälzlager montiert ist.

Die Magnetisierungsvorrichtung bzw. der damit in Zusammenhang stehende Prozess zur Magnetisierung des Magneten wird bevorzugt während wenigstens eines Herstellungsprozesses des Magneten und/oder der Sensorvorrichtung verwendet, insbesondere um den Magneten eine erforderte Magnetisierung einzuprägen.

Weiterhin betrifft die Erfindung die Verwendung der erfindungsgemäßen Sensoranordnung in einem Kraftfahrzeugsteuergerät eines Bremssystems, wobei das Kraftfahrzeugsteuergerät insbesondere wenigstens einen Pedalwegsensor umfasst.

Weitere bevorzugte Ausführungsformen ergeben sich aus der nachfolgenden Beschreibung von Ausführungsbeispielen an Hand von Figuren.

In Prinzipdarstellung zeigen:
Fig. 1 eine Sensoranordnung gemäß dem Stand der Technik,
Fig. 2 Magnetfeldlinienverläufe von kreisförmigen und als Dipol sowie Quadrupol ausgebildeten Permanentmagneten 2,
Fig. 3 ein als Dipol ausgebildetes Ausführungsbeispiel des nicht erfindungsgemäßen Permanentmagneten 2,
Fig. 4 ein als Quadrupol ausgebildetes Ausführungsbeispiel des nicht erfindungsgemäßen Permanentmagneten 2 in unterschiedlichen Ansichten,
Fig. 5 ein Ausführungsbeispiel des erfindungsgemäßen Permanentmagneten 2,
Fig. 6 ein Ausführungsbeispiel der nicht erfindungsgemäßen Sensoranordnung 4 in unterschiedlichen Ansichten und mit simuliertem Magnetfeldlinienverlauf,
Fig. 7 ein Ausführungsbeispiel der nicht erfindungsgemäßen Sensoranordnung 4 (ohne die Darstellung von Sensors 1) in Detaildarstellung mit Bemaßung beispielsgemäßer Abmessungen,
Fig. 8 ein bevorzugtes Ausführungsbeispiel von Magnetisierungsvorrichtung 8,
Fig. 9 weitere bevorzugte Ausführungsbeispiele von Magnetisierungsvorrichtung 8 und
Fig. 10 eine exemplarische Darstellung der Abhängigkeit des Winkelfehlers (Ordinate) vom Abstand von Deckfläche 2-3 (Abszisse) von Permanentmagnet 2 in einem definierten axialen Versatz des Sensorelements um die Rotationsachse des Magneten.

Um eine kurze und einfache Beschreibung der Ausführungsbeispiele zu ermöglichen, werden gleiche Elemente mit den gleichen Bezugszeichen versehen und jeweils nur die für die Erfindung wesentlichen Details erläutert.

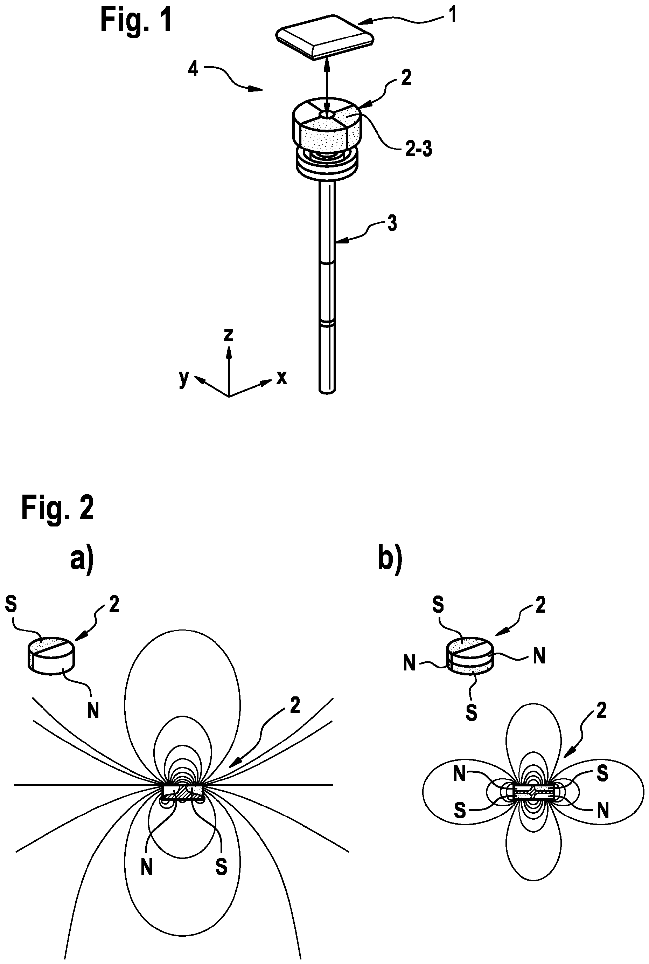

Fig. 1 zeigt eine an sich bekannte Sensoranordnung 4, wie sie insbesondere zur Unterstützung der Kommutierung eines Elektromotors, zum Beispiel eines Elektromotors eines Linearaktuators eines Kraftfahrzeugbremssystems und/oder eines Lenkungssystems eines Kraftfahrzeugs, eingesetzt wird und als Winkelsensoranordnung bzw. Inkrementalgeber Verwendung findet. Diese umfasst dabei zumindest Sensorelement 1 sowie den auf Welle 3 axial fixierten, zweipoligen Permanentmagneten 2, dessen Deckfläche 2-3 im Wesentlichen senkrecht zur z-Achse und, gemäß diesem Ausführungsbeispiel, parallel zu Sensorelement 1 ausgerichtet ist. Bei Sensorelement 1 handelt es sich beispielsgemäß um einen AMR-Sensor, der von Magnet 2 axial beabstandet angeordnet ist. Zur Erfassung von Magnetfeldern - auch im Rahmen dieser Erfindung - sind jedoch auch davon abweichende Arten von Magnetfeldsensoren, z.B. Hall, GMR, XMR, AMR, TMR etc., einsetzbar. Bei Rotation von Welle 3 und Magnet 2 wird die Ausrichtung und/oder Feldstärke des Magnetfelds von Magnet 2 mittels Sensorelement 1 erfasst. Der Aufbau von Sensoranordnung 4 gilt im Wesentlichen auch als für die nachfolgenden Beschreibungen der bevorzugten erfindungsgemäßen Ausführungsbeispiele zugrunde gelegt.

Die Fig. 2 a) und b) zeigen beispielhaft Magnetfeldlinienverläufe von kreisförmigen und als Dipol sowie Quadrupol ausgebildeten Permanentmagneten 2. Aus den Figuren ersichtlich ist, dass der als Dipol magnetisierte Permanentmagnet gemäß Fig. 2 a) ein ausgedehnteres magnetisches Streufeld aufweist, als der als Quadrupol polarisierte Permanentmagnet 2 entsprechend Fig. 2 b), bei welchem die dargestellten Magnetfeldlinien in einem vergleichsweise kleinen Raum um Permanentmagnet 2 geschlossen sind. Beispielsweise liegen auf einer zur nicht dargestellten Welle 3 weisenden Seite des als Dipol ausgebildeten Permanentmagnet 2 weiträumige Feldlinienverläufe vor, die bei der Auslegung von Sensoranordnung 4 gemäß dieser Ausführungsform besondere Berücksichtigung finden sollten, um potentielle, durch diese verursache Störungen der Sensoranordnung selbst oder weiterer funktioneller Baugruppen des die Sensoranordnung umfassenden Kraftfahrzeugsteuergeräts zu begrenzen. Weist Permanentmagnet 2 stattdessen eine quadrupole Magnetisierung auf, so sind diese Feldlinien in einem vergleichsweisen nahen Bereich um Magnet 2 geschlossen, wodurch eine geringere Störungswahrscheinlichkeit für weitere Baugruppen besteht.

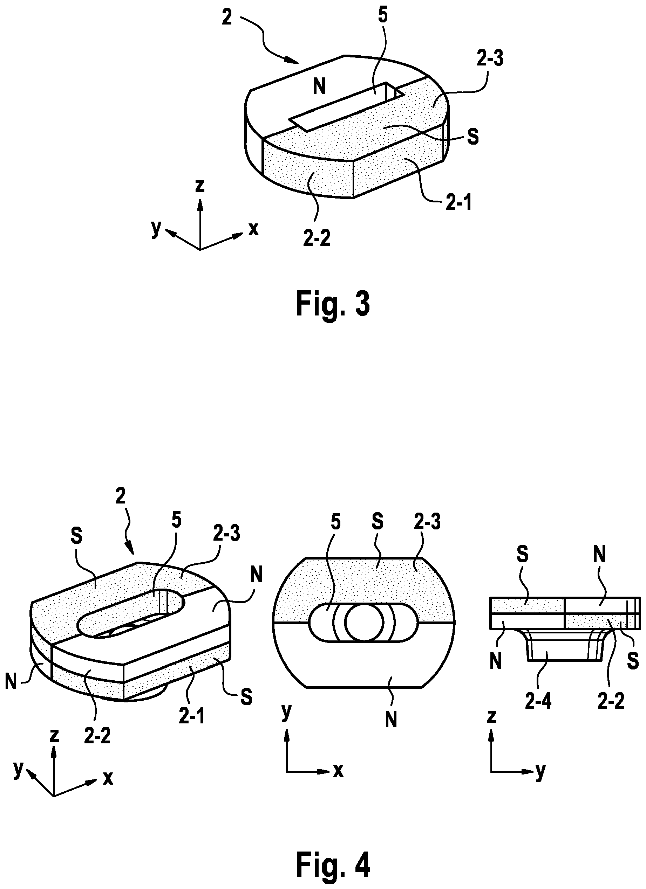

In Fig. 3 ist ein Ausführungsbeispiel von Permanentmagnet 2 dargestellt, wobei dieser zweipolig ausgeführt ist und entlang der Polgrenze, ausgehend von Deckfläche 2-3 von Magnet 2, die rechteckige Vertiefung 5 aufweist. Mittels Vertiefung 5 sowie der parallelen Seitenflächen 2-1 wird auf den magnetischen Feldverlauf und damit insbesondere den Winkelfehler im Bereich von Magnetfeldsensor 1 eingewirkt. Es können auch mehrere Vertiefungen 5 vorgesehen sein, um spezifischere Anpassungen des Feldverlaufs vornehmen zu können. Parallel zur ersten Polgrenze der Magnetisierung von Permanentmagnet 2 weist dieser gerade Seitenflächen 2-1 auf. Die weiteren Seitenflächen 2-2, welche nicht parallel zur Polgrenze ausgerichtet sind, sind kreisbogenförmig ausgebildet.

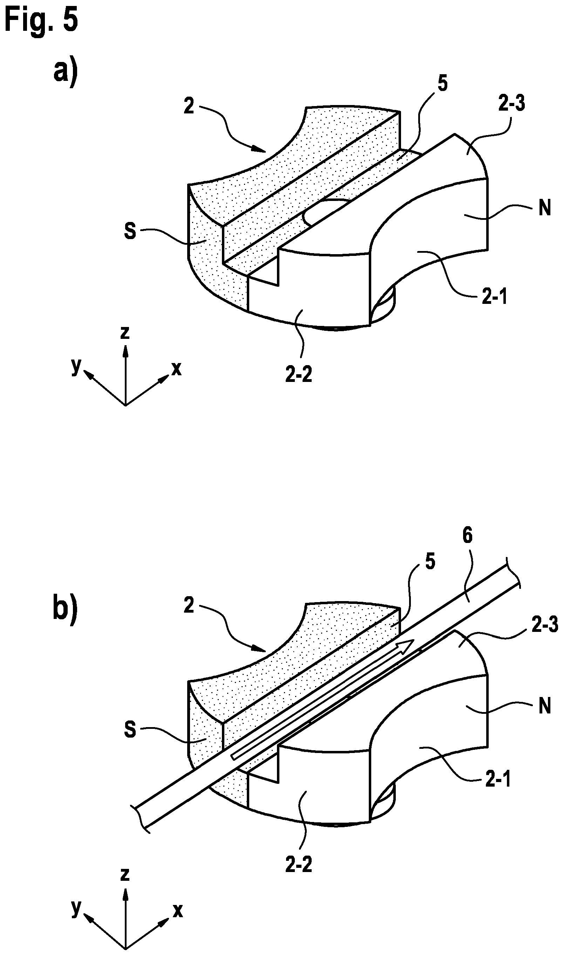

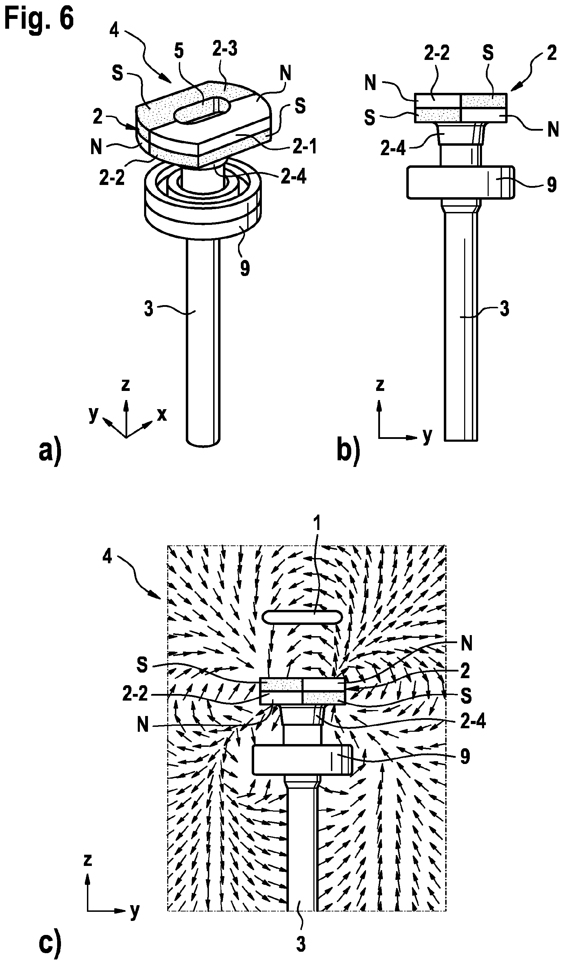

Fig. 4 zeigt ein als Quadrupol ausgebildetes Ausführungsbeispiel von Permanentmagnet 2 in unterschiedlichen Perspektiven, wobei eine ovale Vertiefung 5 vorgesehen ist. Seitenflächen 2-1 sind ebenfalls gerade und Seitenflächen 2-2 kreisbogenförmig ausgebildet. Zudem ist Wellenanbindung 2-4 gezeigt, worauf bei der Beschreibung der Figuren 5 und 6 eingegangen wird.

Die Figur 5 a) zeigt ein erfindungsgemäßes Ausführungsbeispiel von Permanentmagnet 2 in perspektivischer Darstellung. Beispielsgemäß ist dieser als Dipol dargestellt, kann im Sinne der Erfindung jedoch auch als Quadrupol ausgebildet sein. Entlang der Polgrenze, ausgehend von Deckfläche 2-3 von Magnet 2, weist dieser, im Unterschied zum Ausführungsbeispiel der Fig. 3, eine durchgehende Vertiefung 5 auf, wobei durchgehend bedeutet, dass Vertiefung 5 von den Seitenflächen 2-2 einer Seite zu den Seitenflächen 2-2 der anderen Seite verläuft. Die Seitenflächen 2-2, welche nicht parallel zur Polgrenze ausgerichtet sind, sind kreisbogenförmig ausgebildet. Ein weiterer Unterschied zum Ausführungsbeispiel der Fig. 3 ist, dass die in gleicher Ausrichtung wie die Polgrenze verlaufenden Seitflächen 2-1 kreisbogenförmig in der Weise ausgestaltet sind, dass Magnet 2 in einer gedachten Achse, welche die vorgesehene Drehachse (in z-Richtung) schneidet, eine Verjüngung aufweist. Erfindungsgemäß sind diese Ausformungen nicht auf Kreisbögen beschränkt, sondern können beispielsweise auch eine ovale oder hyperbolische Geometrie aufweisen. Vertiefung 5 kann entsprechend diesem oder der weiteren erfindungsgemäßen Ausführungsbeispiele in einer gedachten y-Ebene anstelle einer rechteckigen Querschnittsfläche davon abweichende Querschnittsflächen, z.B. U-förmig, aufweisen. Diese Ausführungsform hat insbesondere den Vorteil bei gleichbleibendem Winkelfehler einen größeren radialen Versatz des Sensorelements zuzulassen.

In der Fig. 5 b) ist ein bevorzugtes Mittel bzw. Verfahren zur Erzeugung der zweipoligen Magnetisierung von Magnet 2 gemäß Ausführungsbeispiel der Fig. 5 a) dargestellt, wobei in besonders einfacher Weise wenigstens ein Stromleiter 6 in Vertiefung 5 eingebracht wird bzw. angeordnet ist und mit einem Strom gewünschter Richtung beaufschlagt wird. Dadurch wird Magnet 2 in vorteilhafter Weise einseitig Flächenmagnetisiert.

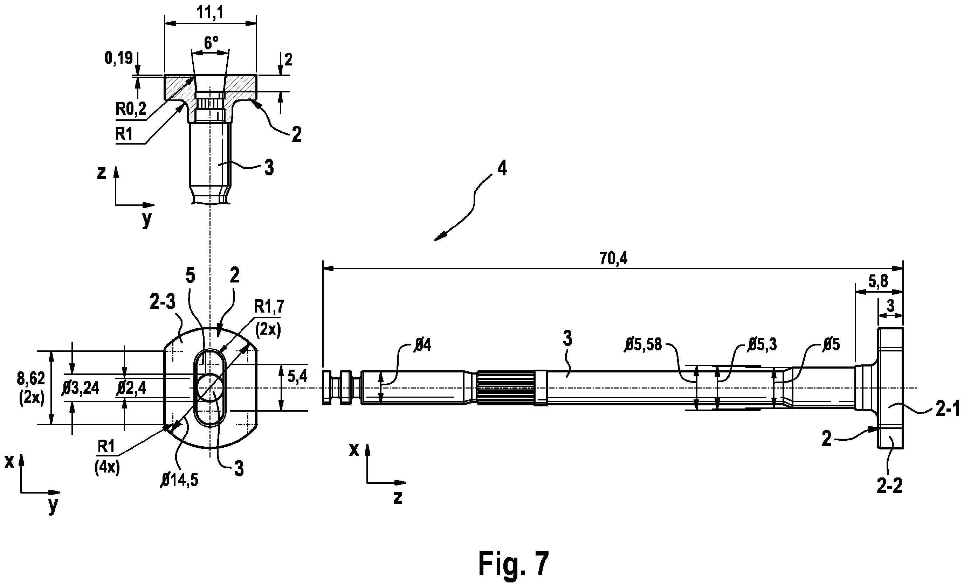

Die Figuren 6 a) bis c) zeigen ein Ausführungsbeispiel von Sensoranordnung 4, wobei Magnetfeldsensor 1 in Fig. 6 a) und b) nicht abgebildet ist. Dargestellt ist zudem Wälzlager 9, welches insbesondere aus einem ferromagnetischen Edelstahl, wie beispielsweise X14CrMoS17, gefertigt ist und welches zur drehbar gelagerten Fixierung der dem Permanentmagnet 2 zugewandten Seite von Welle 3 vorgesehen ist. In Fig. 7 ist das Ausführungsbeispiel gemäß Fig. 6 in konstruktiver Detaildarstellung mit beispielsgemäßen Abmessungen dargestellt, wobei Wälzlager 9 nicht gezeigt ist. In eingebauter Form kann Welle 3 an der dem Permanentmagneten 2 gegenüberliegenden Seite über z.B. ein Getriebe oder Kupplung direkt mit einer Rotorwelle eines Elektromotors verbunden werden.

Permanentmagnet 2 überragt Welle 3 in z-Richtung zumindest um die Tiefe von Vertiefung 5. Alternativ könnte Welle 3 jedoch auch im Wesentlichen bündig mit Deckfläche 2-3 abschließen. Magnet 2 weist, wie in Fig. 7 bemaßt und ausgenommen der Wellenanbindung 2-4, eine Höhe in z-Richtung von etwa 3 mm und eine Tiefe von Vertiefung 5 von 2 mm auf. Wie aus Fig. 7 hervorgeht sind die Innenwandungen von Vertiefung 5, insbesondere zur Vereinfachung der Fertigung, mit einem von 90° abweichenden Winkel gegenüber Deckfläche 2-3 vorgesehen. Zur Verbesserung der Kraftübertragung auf Permanentmagnet 2, besonders unter Berücksichtigung vorhandener Wärmeausdehnung und Vibrationen, ist bevorzugt die konische Wellenanbindung 2-4 vorgesehen. Außerdem kann Welle 3 in diesem Befestigungsbereich zudem Rändelungen oder vergleichbare, diesem Zweck dienende Mittel aufweisen.

Die bevorzugt aus einem para- oder diamagnetischen Werkstoff, z.B. X8CrNiS18, gefertigte Welle 3 wird in einem Herstellungsprozess von Sensorvorrichtung 4 insbesondere mittels eines Spritzgussverfahrens mit dem Werkstoff zur Bildung von Permanentmagnet 2 bzw., aufgrund der nachfolgend ausgeführten Magnetisierung, dessen noch unmagnetisiertem Grundkörper umspritzt. Ein Einpressen von Welle 3 in den bereits magnetisierten oder noch unmagnetisierten Permanentmagnet 2 ist aufgrund der Sprödigkeit von Magnetwerkstoffen in Verbindung mit hohen Einpresskräften, welche das Magnetmaterial beschädigen können, problematisch, jedoch im Rahmen der Erfindung ebenso vorgesehen. Alternativ zu einem para- oder diamagnetischen Werkstoff von Welle 3 kann auch ein ferromagnetischer Werkstoff, z.B. X14CrMoS178, vorgesehen sein, wodurch beispielsweise der Magnetfeldlinienverlauf weiter beeinflusst werden kann oder sich weitere Vorteile ergeben.

Zur Veranschaulichung zeigt Fig. 6 c) einen im Wesentlichen als rückwirkungsfrei simulierten Feldlinienverlauf von Sensoranordnung 4, gemäß Ausführungsbeispiel der Fig. 6 a) und b). Weitere Baugruppen eines die Sensoranordnung 4 umgebenden Kraftfahrzeugsteuergeräts sind für die Simulation nicht berücksichtigt. Wie bereits in der Beschreibung zu Fig. 3 dargelegt, hat die realisierte Polarisierung der Magnetisierung und die geometrischen Vorgaben von Magnet 2 einen wesentlichen Einfluss auf den Verlauf der Magnetfeldlinien und somit auf das erzeugte magnetische Streufeld. Daher kann es entsprechend eines weiteren, in den Figuren nicht gezeigten Ausführungsbeispiels vorgesehen sein, dass Welle 3 zur Beeinflussung des Magnetfeldlinienverlaufs einen entsprechend Vertiefung 5 geformten Endabschnitt umfasst. Dieser Endabschnitt von Welle 3 kann bevorzugt unterhalb von Deckfläche 2-3 bzw. bündig mit dieser abschließen oder darüber hinaus geführt sein. Alternativ dazu kann Vertiefung 5 mittels eines dia-, para- oder ferromagnetischen Werkstoffs vollständig oder teilweise aufgefüllt sein. Zudem kann in Abhängigkeit der jeweiligen Anforderung einer Applikation die Remanenz des Magnetwerkstoffs bzw. der Werkstoffe der weiteren Komponenten, wie zum Beispiel der Welle oder des Wälzlagers, angepasst werden.

Insbesondere für hohe Drehzahlen von Welle 3 und Magnet 2 von z.B. 12.000 U/min, wie sie bei hydraulischen Pumpen für Kraftfahrzeugbremssysteme auftreten, sind jedoch bei der Auslegung einer Anordnung mit entsprechend geformtem Endabschnitt von Welle 3 - in besonderem Maße bei rechteckig geformtem Querschnitt (Hammerkopf) - die dabei auftretenden Scherkräfte zu berücksichtigen, damit insbesondere beim Beschleunigen und/oder Abbremsen Magnet 2 nicht beschädigt bzw. gespalten wird.

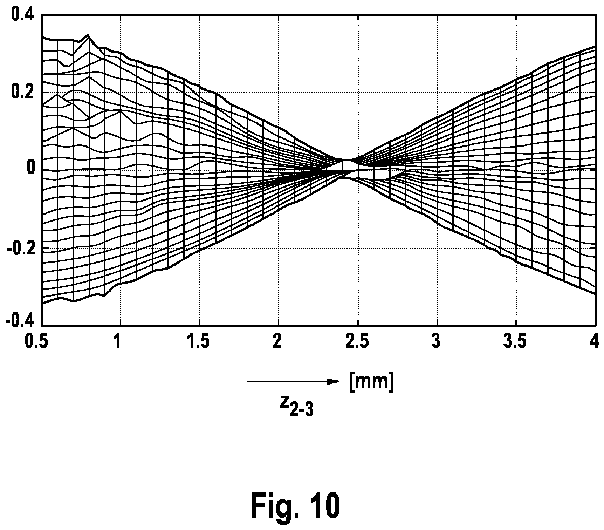

Fig. 10 zeigt die Abhängigkeit des Winkelfehlers (Ordinate) vom Abstand von Deckfläche 2-3 (Abszisse) für eine beispielhafte Ausführungsform der Erfindung. Der Winkelfehler weist dabei in einem Abstand von etwa 2,4 mm ein Minimum auf, wobei Magnetfeldsensor 1, falls weitere Bedingungen, wie etwa eine geforderte Mindestfeldstärke, erfüllt sind, bevorzugt im Bereich dieses Minimums angeordnet ist. Insbesondere durch Anpassung der Maße Schlüsselweite (Abstand der Seitenflächen 2-1 voneinander) und der Geometrie der Seitenfläche 2-1 - z.B. kurvenförmiger oder gerader Verlauf - sowie der Breite (y-Richtung), Länge (x-Richtung) und Tiefe (z-Richtung) der Vertiefung 5 kann der Winkelfehler bzw. das Minimum dessen, in Abhängigkeit vom Abstand von Deckfläche 2-3 in Richtung Magnetfeldsensor 1, an die Randbedingungen der jeweiligen Applikation angepasst werden.

Nachfolgend sind stichpunktartig Größen bzw. Toleranzbereiche von Sensoranordnung 4 für eine Verwendung in einem elektrohydraulischen Steuergerät eines Kraftfahrzeugbremssystems angegeben, die als beispielhaft und ohne Einschränkung auf diese anzusehen sind:
- Höhe von Permanentmagnet 2 (z-Richtung) etwa 3 mm
- Feldstärke im Bereich von Magnetfeldsensor 1 in xy-Ebene größer oder gleich 42 mT
- Betrag des magnetischen Winkelfehlers im Bereich von Magnetfeldsensor 1 kleiner oder gleich 0,5°
- Abstand von Magnet 2 zu Magnetfeldsensor 1 (Nennluftspalt) in z-Richtung etwa 2 mm
- Minimaler Abstand von Magnet 2 zu Magnetfeldsensor 1 (sensitives Element) in z-Richtung etwa 0,7 mm
- Axialer Versatz (z-Richtung) von Magnetfeldsensor 1 zu Magnet 2 im Bereich +/- 1,25 mm
- Größter Durchmesser von Magnet 2 in xy-Ebene etwa 14,5 mm
- Tiefe von Vertiefung 5 etwa 2 mm
- Radialer Versatz (x und/oder y-Richtung) +/- 1 mm

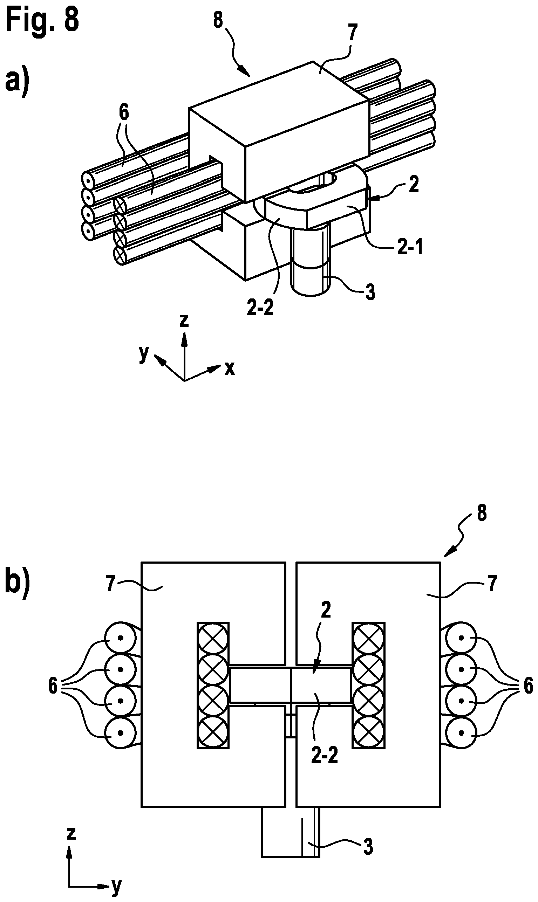

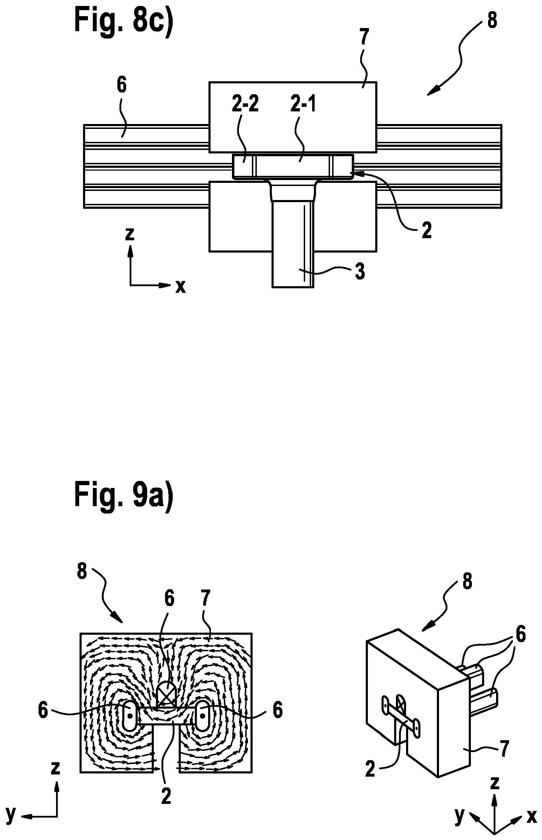

In den Figuren 8 a), b) und c) ist ein Ausführungsbeispiel von Magnetisierungsvorrichtung 8 zur Erzeugung eines Quadrupols, beispielsweise entsprechend der Figuren 4 oder 5, in unterschiedlichen Ansichten schematisch dargestellt. Zur besseren Anschaulichkeit der perspektiven Darstellung ist in Fig. 8 a) lediglich eine Hälfte der im Wesentlichen symmetrisch aufgebauten Magnetisierungsvorrichtung 8 abgebildet. Diese umfasst die Stromleiter 6 und das zweiteilige Joch 7, wobei jedes Teil einen Luftspalt des magnetischen Kreises aufweist, worin der zu magnetisierende Permanentmagnet 2 zur Durchführung der Magnetisierung eingebracht wird. Stromleiter 6 können bevorzugt auch in Spulenform auf die Schenkel des jeweiligen Jochteils 7 aufgewickelt sein, womit sich ein transformatorartiger Grundaufbau ergibt. Die gezeigten Stromrichtungen in den Stromleitern 6 sind beispielhaft und abhängig von der zu erzielenden Polarisierung von Magnet 2, wobei mit den Stromrichtungen gemäß Fig. 8 ein quadrupoler Magnet 2 mit einer Polarisierung entsprechend der in Fig. 4 gezeigten erzeugt wird. Die in Fig. 8 a) gezeigte Hälfte ist in Fig. 8 c) nochmals in Vorderansicht gezeigt. Aus der Seitendarstellung gemäß Fig. 8 b) wird mit Darstellung beider Hälften insbesondere der spiegelsymmetrische Aufbau von Magnetisierungsvorrichtung 8 deutlich.

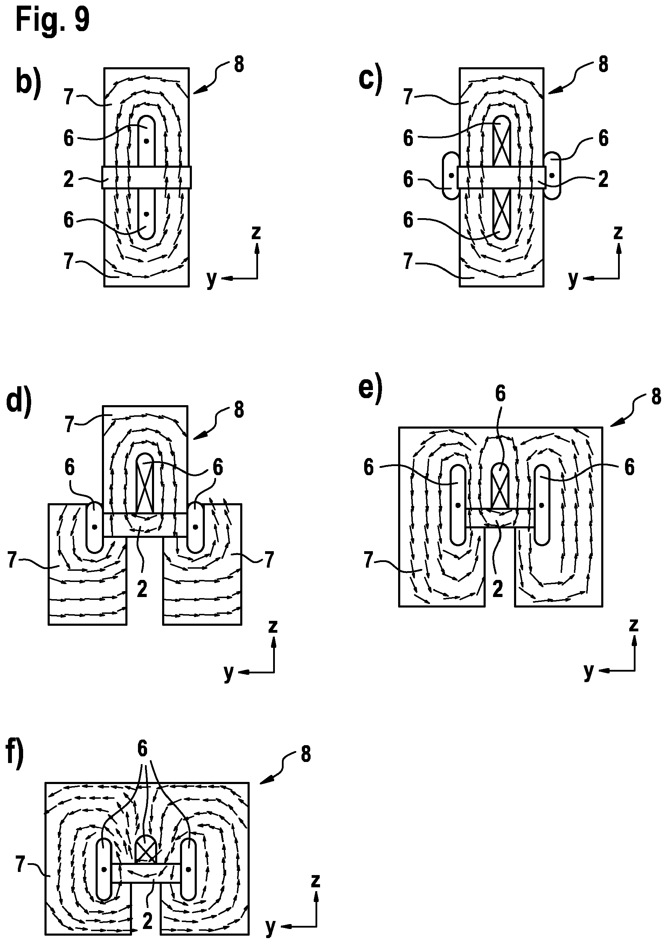

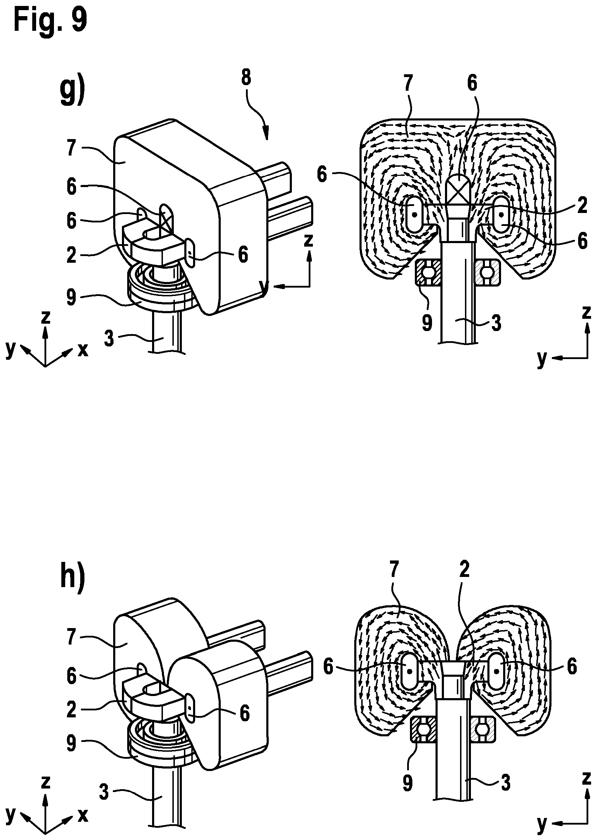

In den Figuren 9 a) bis h) sind weitere bevorzugte Ausführungsbeispiele von Magnetisierungsvorrichtung 8 zur Bildung quadrupoler Polarisierung, durch welche die resultierenden Magnetisierungseigenschaften bzw. Polarisierungseigenschaften von Permanentmagnet 2 in unterschiedlicher Ausprägung vorgegeben werden können, dargestellt. Mittels ausgewählter Vorgabe der Stromrichtung, Stromstärke, z.B. 40 kA, und Impulsdauer des Stroms, z.B. 200 µs, bestehen weitere Möglichkeiten der Einflussnahme auf die verbleibenden Magnetisierungseigenschaften von Permanentmagnet 2. Insbesondere für die Ausführungsbeispiele von Magnetisierungsvorrichtung 8 der Figuren 9 b) und c) ist eine Magnetisierung von Magnet 2 vorgesehen, ohne dass dieser bereits an Welle 3 fixiert ist. In den Ausführungsformen entsprechend der Fig. 9 a) und d) bis h) ist Welle 3 oder eine für das Einbringen von Magnet 2 in den magnetischen Kreis vorgesehene Werkzeugachse berücksichtigt, jedoch nicht in jedem Fall mit abgebildet oder im Falle der Werkzeugachse, während des Magnetisierungsvorgangs, gegebenenfalls entfernt. In Ergänzung oder alternativ zu seitlich von Permanentmagnet 2 bzw. Seitenflächen 2-1 angeordneten Stromleitern 6 können weitere Stromleiter 6 zur Beeinflussung des einprägenden Magnetfelds vorgesehen sein, wie zum Beispiel für die Ausführungsformen der Fig. 9 a) bis g) gezeigt. Durch ein von einem Stromfluss in diesem hervorgerufenen Magnetfeld treten die resultierenden Feldlinien nicht senkrecht beispielsweise in Deckfläche 2-3 ein. Die Ausführungsbeispiele der Fig. 9 g) und h) - Magnetisierungsvorrichtung 8 ist auch in der perspektivischen Darstellung als Schnitt abgebildet - berücksichtigen bei der Ausformung von Joch 7 zudem Wellenanbindung 2-4 sowie, dass Wälzlager 9 bereits an Welle 3 befestigt wurde. Weiterhin können insbesondere mit der Ausführungsform von Magnetisierungsvorrichtung 8 gemäß Fig. 9 g) ausreichend hohe Feldstärken zur Sättigung des Magnetmaterials von Permanentmagnet 2 mit im Wesentlichen definierter Polgrenze entlang von Vertiefung 5 erzielt werden. Mittels der Ausführungsform von Magnetisierungsvorrichtung 8 gemäß Fig. 9 h) ist demgegenüber eine Verbesserung in Richtung einer optimalen quadrupolen Polarisierung von Permanentmagnet 2 umsetzbar. Diese und weitere gezeigte Merkmale einzelner Ausführungsbeispiele von Magnetisierungsvorrichtung 8 lassen sich auch auf weitere beschriebene Ausführungsformen übertragen. Magnet 2 kann, entsprechend der realisierten Umsetzung von Magnetisierungsvorrichtung 8 und insbesondere in Abhängigkeit des Vorhandenseins von Welle 3 oder einer Werkzeugachse, beispielsweise über eine offene Seite (entlang der Stromleiter 6) und/oder bei einem mehrteiligen Joch 7 durch teilweises oder vollständiges Öffnen desselben in Magnetisierungsvorrichtung 8 eingebracht und/oder entnommen werden.

Die Fixierung von Wälzlager 9 und zu magnetisierendem Permanentmagnet 2 an Welle 3, vor Ausführen des Prozessschrittes der Magnetisierung, ist insbesondere aus prozesstechnischer Sicht und/oder zur Einhaltung einer vorgegebenen Sauberkeitsklasse eines Kraftfahrzeugsystems bevorzugt. Wird Permanentmagnet 2 bereits in einem früheren Prozessschritt magnetisiert, sammeln sich unter Umständen in nachfolgenden Arbeitsschritten Metallpartikel daran. Solcherlei Verunreinigungen können im hergestellten Produkt, z.B. Kraftfahrzeugsteuergerät eines Kraftfahrzeugbremssystems, oder den Anlagen zur Herstellung desselben zu Fehlfunktionen und Beschädigungen führen.

## Patentansprüche

1. Sensoranordnung (4) zur Erfassung einer Rotorposition eines Elektromotors, insbesondere eines Kraftfahrzeugsteuergeräts, wobei die Sensoranordnung (4) als berührungslos arbeitende Sensoranordnung (4) ausgebildet ist, welche zumindest einen Permanentmagneten (2) und wenigstens einen Magnetfeldsensor (1) umfasst, wobei der Permanentmagnet (2) in zumindest einer dem Magnetfeldsensor zugewandten Deckfläche (2-3) wenigstens eine Vertiefung (5) aufweist, wobei eine längere Achse (x-Richtung) der Vertiefung (5) entlang wenigstens einer ersten Polgrenze (N-S) der Magnetisierung des Permanentmagneten (2) verläuft und der Permanentmagnet (2) parallel zur längeren Achse (x-Richtung) der Vertiefung und/oder der ersten Polgrenze (N-S) der Magnetisierung des Permanentmagneten (2) Seitenflächen (2-1) aufweist, welche einen kurvenförmigen Verlauf beschreiben, **dadurch gekennzeichnet, dass** der kurvenförmige Verlauf der Seitenflächen (2-1) konkav ausgebildet ist.

2. Sensoranordnung (4) gemäß Anspruch 1, **dadurch gekennzeichnet, dass** die Vertiefung (5) auf der Deckfläche (2-3) des Permanentmagneten (2) eine rechteckige oder ovale Form aufweist.

3. Sensoranordnung (4) gemäß Anspruch 1 oder 2, **dadurch gekennzeichnet, dass** die Vertiefung (5) die Deckfläche (2-3) des Permanentmagneten (2) entlang der längeren Achse (x-Richtung) vollständig durchzieht.

4. Sensoranordnung (4) gemäß Anspruch 3, **dadurch gekennzeichnet, dass** weitere Seitenflächen (2-2) des Permanentmagneten (2), welche nicht entlang der längeren Achse der Vertiefung (x-Richtung) und/oder der ersten Polgrenze (N-S) ausgerichtet sind, einen kurvenförmigen, insbesondere konvexen, oder geraden Verlauf aufweisen.

5. Sensoranordnung (4) gemäß einem der vorhergehenden Ansprüche, **dadurch gekennzeichnet, dass** der Permanentmagnet (2) als magnetischer Dipol oder magnetischer Quadrupol magnetisiert ist.

6. Sensoranordnung (4) gemäß einem der vorhergehenden Ansprüche, **dadurch gekennzeichnet, dass** der Magnetfeldsensor (1) von der Deckfläche (2-3) des Permanentmagneten (2) derart beabstandet ist, dass dieser in einem Bereich eines Minimums eines Winkelfehlers des Magnetfelds des Permanentmagneten angeordnet ist.

7. Sensoranordnung (4) gemäß einem der vorhergehenden Ansprüche, **dadurch gekennzeichnet, dass** der Permanentmagnet (2) an einer Welle (3) fixiert ist, wobei der Werkstoff des Permanentmagneten (2) insbesondere in einem Spritzgussverfahren um und/oder an die Welle (3) gespritzt wird.

8. Verwendung der Sensoranordnung gemäß einem der Ansprüche 1 bis 7 in einem Kraftfahrzeugsteuergerät eines Bremssystems, wobei das Kraftfahrzeugsteuergerät insbesondere wenigstens einen Pedalwegsensor umfasst.

## Claims

1. Sensor arrangement (4) for capturing a rotor position of an electric motor, in particular of a motor vehicle control device, wherein the sensor arrangement (4) is configured as a contactlessly operating sensor arrangement (4), which comprises at least one permanent magnet (2) and at least one magnetic field sensor (1), wherein the permanent magnet (2) has at least one depression (5) in at least one top surface (2-3) facing the magnetic field sensor, wherein a longer axis (x-direction) of the depression (5) extends along at least a first pole boundary (N-S) of the magnetization of the permanent magnet (2) and the permanent magnet (2) has, parallel to the longer axis (x-direction) of the depression and/or the first pole boundary (N-S) of the magnetization of the permanent magnet, side surfaces (2-1), which describe a curved profile, **characterized in that** the curved profile of the side surfaces (2-1) is configured to be concave.

2. Sensor arrangement (4) according to Claim 1, **characterized in that** the depression (5) on the top surface (2-3) of the permanent magnet (2) has a rectangular or oval shape.

3. Sensor arrangement (4) according to Claim 1 or 2, **characterized in that** the depression (5) runs completely through the top surface (2-3) of the permanent magnet (2) along the longer axis (x-direction).

4. Sensor arrangement (4) according to Claim 3, **characterized in that** further side surfaces (2-2) of the permanent magnet (2), which are not oriented along the longer axis (x-direction) of the depression and/or the first pole boundary (N-S) have a curved, in particular convex, or straight profile.

5. Sensor arrangement (4) according to one of the preceding claims, **characterized in that** the permanent magnet (2) is magnetized as a magnetic dipole or a magnetic quadrupole.

6. Sensor arrangement (4) according to one of the preceding claims, **characterized in that** the magnetic field sensor (1) is spaced apart from the top surface (2-3) of the permanent magnet (2) such that said sensor is arranged within a region of a minimum of an angular error of the magnetic field of the permanent magnet.

7. Sensor arrangement (4) according to one of the preceding claims, **characterized in that** the permanent magnet (2) is fixed to a shaft (3), wherein the material of the permanent magnet (2) is injection-moulded around and/or to the shaft (3) in particular in an injection-moulding method.

8. Use of the sensor arrangement according to one of Claims 1 to 7 in a motor vehicle control device of a braking system, wherein the motor vehicle control device comprises in particular at least one pedal position sensor.

## Revendications

1. Agencement de capteurs (4) servant à détecter la position d'un rotor d'un moteur électrique, en particulier d'un appareil de commande de véhicule automobile, dans lequel l'agencement de capteurs (4) est conçu sous la forme d'un agencement de capteurs fonctionnant sans contact (4) qui comprend au moins un aimant permanent (2) et au moins un capteur de champ magnétique (1), dans lequel l'aimant permanent (2) comporte au moins un évidement (5) ménagé dans au moins une surface de recouvrement (2-3) tournée vers le capteur de champ magnétique, dans lequel un axe long (direction x) de l'évidement (5) s'étend le long d'au moins une première limite de pôle (N-S) de la magnétisation de l'aimant permanent (2) et l'aimant permanent (2) présente des faces latérales (2-1) parallèles à l'axe long (direction x) de l'évidement et/ou à la première limite de pôle (N-S) de la magnétisation de l'aimant permanent (2), lesquelles faces latérales décrivent un tracé curviligne, **caractérisé en ce que** le tracé des faces latérales (2-1) est concave.

2. Agencement de capteurs (4) selon la revendication 1, **caractérisé en ce que** l'évidement (5) ménagé sur la surface de recouvrement (2-3) de l'aimant permanent (2) présente une forme rectangulaire ou ovale.

3. Agencement de capteurs (4) selon la revendication 1 ou 2, **caractérisé en ce que** l'évidement (5) s'étend entièrement à travers la surface de recouvrement (2-3) de l'aimant permanent (2) le long de l'axe long (direction x).

4. Agencement de capteurs (4) selon la revendication 3, **caractérisé en ce que** d'autres surfaces latérales (2-2) de l'aimant permanent (2), qui ne sont pas orientées le long de l'axe long de l'évidement (direction x) et/ou de la première limite de pôle (N-S), présentent un tracé courbe, en particulier convexe, ou droit.

5. Agencement de capteurs (4) selon l'une des revendications précédentes, **caractérisé en ce que** l'aimant permanent (2) est magnétisé sous la forme d'un dipôle magnétique ou d'un quadripôle magnétique.

6. Agencement de capteurs (4) selon l'une des revendications précédentes, **caractérisé en ce que** le capteur de champ magnétique (1) est espacé de la surface de recouvrement (2-3) de l'aimant permanent (2) de manière à ce qu'il soit disposé dans une zone où se situe un minimum d'une erreur angulaire du champ magnétique de l'aimant permanent.

7. Agencement de capteurs (4) selon l'une des revendications précédentes, **caractérisé en ce que** l'aimant permanent (2) est fixé à un arbre (3), dans lequel le matériau de l'aimant permanent (2) est injecté autour et/ou sur l'arbre (3), en particulier par un processus de moulage par injection.

8. Utilisation de l'agencement de capteurs selon l'une des revendications 1 à 7 dans un appareil de commande de véhicule automobile d'un système de freinage, dans lequel l'unité de commande de véhicule automobile comprend en particulier au moins un capteur de course de pédale.
